# EUROPÄISCHE PATENTSCHRIFT

(11) **EP 3 892 504 B1**
(45) Veröffentlichungstag und Bekanntmachung des Hinweises auf die Patenterteilung: **23.08.2023**
(21) Anmeldenummer: 21165742.4
(22) Anmeldetag: 30.03.2021
(51) Int. Cl.: B60T 13/26, B60T 13/68

(54) **ANHÄNGERSTEUERMODUL EINER DRUCKMITTELBETRIEBENEN BREMSANLAGE EINES ZUGFAHRZEUGS MIT EINER VENTILANORDNUNG ZUR STEUERUNG EINER PNEUMATISCHEN BREMSANLAGE EINES ANHÄNGERFAHRZEUGS**
TRAILER CONTROL MODULE OF A BRAKE SYSTEM OPERATED BY MEANS OF PRESSURE FLUID OF A TRACTOR WITH A VALVE ARRANGEMENT FOR CONTROLLING A PNEUMATIC BRAKE SYSTEM OF A TRAILER VEHICLE
MODULE DE COMMANDE DE REMORQUE D'UNE INSTALLATION DE FREINAGE ACTIONNÉ PAR FLUIDE SOUS PRESSION D'UN VÉHICULE TRACTEUR DOTÉ D'UN ENSEMBLE DESTINÉ À LA COMMANDE D'UNE INSTALLATION DE FREINAGE PNEUMATIQUE D'UN VÉHICULE REMORQUE

(30) Priorität: 31.03.2020 DE 102020108947
(43) Veröffentlichungstag der Anmeldung: 13.10.2021
(73) Patentinhaber: ZF CV Systems Global GmbH, 3006 Bern (CH)
(72) Erfinder: BRÜTT, Mirko, 31832 Springe (DE); HAVERKAMP, Michael, 30455 Hannover (DE)
(74) Vertreter: ZF Friedrichshafen AG

(56) Entgegenhaltungen:
- WO-A1-2014/202131
- WO-A1-2016/169968
- DE-A1-102014 002 614
- DE-A1-102014 118 943
- DE-A1-102015 112 490
- DE-A1-102018 104 143
- DE-A1-102018 122 193
- DE-A1-102019 100 869

## Beschreibung

Die Erfindung betrifft ein Anhängersteuermodul einer druckmittelbetriebenen Bremsanlage eines Zugfahrzeugs, mit einer Ventilanordnung zur Steuerung einer pneumatischen Bremsanlage eines Anhängerfahrzeugs. Die Ventilanordnung weist folgendes auf: Ein elektronisch gesteuertes Anhängersteuerventil, welches ein pneumatisch gesteuertes Relaisventil mit einem invertierten Steuereingang enthält, ein druckmittelgesteuertes Backupventil, welches ein druckmittelgesteuertes Relaisventil enthält, und mindestens ein elektronisch gesteuertes Parkbremsventil, mittels dem das Relaisventil des Anhängersteuerventils an dessen invertierten Steuereingang pneumatisch ansteuerbar ist.

Moderne Zugfahrzeuge, wie Lastkraftwagen und Sattelzugmaschinen, die vorwiegend für Fahrten auf befestigten Straßen und Autobahnen vorgesehen sind, weisen üblicherweise eine druckluftbetriebene Bremsanlage mit elektronischer Steuerung auf. Im Unterschied dazu sind moderne Zugfahrzeuge, wie Traktoren, die für den Einsatz abseits von befestigten Straßen und Wegen ausgelegt sind, häufig mit hydraulischen Bremsanlagen mit elektronischer Steuerung ausgerüstet. Die Bremsanlagen beider Fahrzeuggattungen weisen üblicherweise eine Ventilanordnung zur Steuerung einer pneumatischen Bremsanlage eines ankoppelbaren Anhängerfahrzeugs auf. Eine solche Ventilanordnung weist ein elektronisch gesteuertes Anhängersteuerventil und ein druckmittelgesteuertes Backupventil auf. Sie kann jedoch auch mit mindestens einem elektronisch gesteuerten Parkbremsventil versehen sein.

Im Normalbetrieb wird in dem Anhängersteuerventil ein mittels eines Kompressors erzeugter und in einer Druckluftversorgungsanlage aufbereiteter Vorratsdruck an einen Kupplungskopf "Vorrat" (rot) des Zugfahrzeugs durchgeleitet und in Abhängigkeit von einem elektronischen Bremswertsignal mittels eines mit einem Einlassmagnetventil und einem Auslassmagnetventil eingestellten Steuerdruckes in einem druckgesteuerten Relaisventil des Anhängersteuerventils ein entsprechender Bremssteuerdruck eingestellt. Dieser Bremssteuerdruck wird an den Kupplungskopf "Bremse" (gelb) des Zugfahrzeugs geführt. Bei einem Ausfall der elektronischen Steuerung beziehungsweise des elektronischen Bremswertsignals wird durch die Umschaltung eines Redundanzventils das elektronisch gesteuerte Anhängersteuerventil deaktiviert und in dem druckgesteuerten Relaisventil des Backupventils mittels eines an einer Bremsleitung des Zugfahrzeugs abgegriffenen Bremsdruckes ein Bremssteuerdruck für das Anhängerfahrzeug eingestellt und an den Kupplungskopf "Bremse" (gelb) geführt. Hierdurch ist die Funktion der Betriebsbremsen des Anhängerfahrzeugs auch bei einem Ausfall der elektronischen Steuerung des Anhängersteuerventils gewährleistet.

In der DE 10 2014 002 614 A1 sind mehrere Ausführungen einer derartigen Ventilanordnung eines hydraulisch gebremsten Zugfahrzeugs zur Steuerung des Bremsdruckes eines pneumatisch gebremsten Anhängerfahrzeugs beschrieben, die für die Einsteuerung des an den Kupplungskopf "Bremse" weitergeleiteten Bremssteuerdruckes jeweils ein elektronisch gesteuertes Anhängersteuerventil und ein hydraulisch gesteuertes Backupventil umfassen. Das Anhängersteuerventil und das Backupventil sind hier jeweils als separate Ventileinheiten ausgeführt, die über pneumatische Leitungen miteinander und über elektrische Steuerleitungen mit einem elektronischen Steuergerät verbunden sind.

Dagegen beschreibt die nicht vorveröffentlichte DE 10 2019 100 869 A1 eine Ausführungsform einer Ventilanordnung eines hydraulisch gebremsten Zugfahrzeugs zur Steuerung des Bremsdruckes eines pneumatisch gebremsten Anhängerfahrzeugs, bei der die Ventile des Anhängersteuerventils und des Backupventils in einem Anhängersteuermodul mit einem einzigen Gehäuse zusammengefasst sind. Durch diese integrierte Anordnung des Anhängersteuerventils und des Backupventils in einem Anhängersteuermodul wird deren Montage in dem betreffenden Zugfahrzeug vereinfacht und mögliche Montagefehler vermieden.

Zugfahrzeuge mit druckmittelbetriebenen Bremsanlagen weisen durchweg getrennte Radbremszylinder einerseits für die Betätigung der Radbremsen in der Funktion als Betriebsbremsen und andererseits in der Funktion als Park- oder Feststellbremsen auf. Für die Betätigung der Betriebsbremsen eines Zugfahrzeugs sind aktiv wirksame Radbremszylinder, wie Membran- oder Kolbenbremszylinder, vorgesehen, die mit einem über ein Fußbremsventil eingesteuerten Bremsdruck beaufschlagt werden. Dagegen sind für die Betätigung der Park- oder Feststellbremsen eines Zugfahrzeugs passiv wirksame Radbremszylinder in Form von Federspeicherbremszylindern vorgesehen, die durch die Einsteuerung eines Druckmittels gelöst und durch die Abfuhr des Druckmittels betätigt, also in deren Schließstellung gebracht werden. Die Radbremszylinder der Betriebsbremsen und der Park- oder Feststellbremsen können auf getrennte mechanische Bremselemente wirksam sein oder, wenn sie beispielsweise in Kombibremszylindern zusammengefasst sind, mit denselben mechanischen Bremselementen in Stellverbindung stehen.

Anhängerfahrzeuge mit pneumatischen Bremsanlagen sind dagegen, insbesondere wenn sie für den Einsatz in der Land- und Forstwirtschaft vorgesehen sind, meistens nur mit aktiv wirksamen Radbremszylindern, wie Membran- oder Kolbenbremszylindern, ausgerüstet, die sowohl in der Betriebsbremsfunktion als auch in der Parkbremsfunktion belüftet werden. Während die Betätigung der Radbremszylinder eines Anhängerfahrzeugs in der Betriebsbremsfunktion in dem Anhängersteuerventil des Zugfahrzeugs über den an einem direkten Steuereingang des Relaisventils anliegenden Steuerdruck eingesteuert und an den Kupplungskopf "Bremse" (gelb) weitergeleitet wird, erfolgt die Betätigung der Radbremszylinder in der Parkbremsfunktion in dem Anhängersteuerventil des Zugfahrzeugs bei drucklosem direkten Steuereingang über den an einem invertierten Steuereingang des Relaisventils anliegenden Steuerdruck.

Bei drucklosem invertierten Steuereingang steuert das Relaisventil des Anhängersteuerventils den Maximaldruck (Vorratsdruck) aus und leitet diesen an den Kupplungskopf "Bremse" (gelb) weiter, wodurch die Radbremszylinder des Anhängerfahrzeugs über das dortige Anhängerbremsventil mit maximalem Luftdruck beaufschlagt und damit die Radbremsen betätigt werden. Bei mit dem Maximaldruck (Vorratsdruck) beaufschlagten invertierten Steuereingang wird der Kupplungskopf "Bremse" über das Relaisventil des Anhängersteuerventils entlüftet, wodurch die Radbremszylinder des Anhängerfahrzeugs über das dortige Anhängerbremsventil entlüftet und damit die Radbremsen gelöst werden.

Bei einem Fahrzeuggespann der vorliegend betrachteten Art erfolgt das Ein- und Auslegen der Parkbremsen des Zugfahrzeugs und der Radbremsen des Anhängerfahrzeugs in der Parkbremsfunktion bislang über ein manuell betätigbares Handbremsventil, welches in der Fahrerkabine des Zugfahrzeugs angeordnet ist. Mittels dieses Handbremsventils wird unmittelbar die Belüftung und Entlüftung der Federspeicherbremszylinder des Zugfahrzeugs sowie des invertierten Steuereingangs am Relaisventil des Anhängersteuerventils gesteuert.

Es sind jedoch auch schon Ausführungen von Bremsanlagen von Fahrzeuggespannen bekannt, bei denen das Ein- und Auslegen der Parkbremsen des Zugfahrzeugs und der Radbremsen des Anhängerfahrzeugs in der Parkbremsfunktion automatisch mittels mindestens eines Magnetschaltventils erfolgt, welches beispielsweise bei einem Zugfahrzeug mit automatischem Fahrgetriebe in Abhängigkeit von der Stellung eines Getriebewählhebels betätigt wird. Hierdurch werden die Parkbremsen des Zugfahrzeugs und die Radbremsen des Anhängerfahrzeugs automatisch eingelegt, wenn das Fahrzeuggespann steht und der Getriebewählhebel in die Parkstellung "P" geschwenkt ist.

Eine entsprechende Bremsanlage eines Fahrzeuggespanns ist zum Beispiel aus der DE 10 2018 104 143 A1 bekannt. In deren Ventilanordnung zur Steuerung der pneumatischen Bremsanlage eines Anhängerfahrzeugs ist ein Feststellbremsmodul mit zwei parallelgeschalteten Parkbremsventilen und einem ausgangsseitig angeordneten Wechselventil vorgesehen. Die beiden Parkbremsventile sind als 3/2-Wege-Magnetschaltventile ausgeführt und über separate Schalteinheiten eines elektronischen Steuergerätes unabhängig voneinander schaltbar. Über das Wechselventil sind die Ausgänge der beiden Parkbremsventile mit dem invertierten Steuereingang am Relaisventil des Anhängersteuerventils verbunden. Im unbetätigten, also unbestromten Zustand beider Parkbremsventile ist der invertierte Steuereingang des Relaisventils drucklos geschaltet, welches zum Anlegen beziehungsweise Schließen der Radbremsen des Anhängerfahrzeugs in der Parkbremsfunktion führt. Bei der Betätigung, also Umschaltung eines der beiden Parkbremsventile wird der invertierte Steuereingang des Anhängersteuerventils aus einer druckführenden Versorgungsleitung mit dem Vorratsdruck beaufschlagt, welches zum Lösen der Radbremsen des Anhängerfahrzeugs führt. Die Betätigung der Parkbremsen des Zugfahrzeugs erfolgt jedoch weiterhin manuell über ein Handbremsventil oder automatisch über ein weiteres Magnetschaltventil.

Der vorliegenden Erfindung liegt die Aufgabe zu Grunde, ein Anhängersteuermodul einer druckmittelbetriebenen Bremsanlage eines Zugfahrzeugs mit einer Ventilanordnung zur Steuerung einer pneumatischen Bremsanlage eines Anhängerfahrzeugs der eingangs genannten Art vorzuschlagen, deren Funktionsumfang mit möglichst geringem Aufwand um die Betätigung der Parkbremsen des Zugfahrzeugs erweitert ist.

Die Lösung dieser Aufgabe wurde mit einem Anhängersteuermodul erreicht, welches die Merkmale des Anspruchs 1 aufweist. Vorteilhafte Ausgestaltungen und Weiterbildungen sind in den abhängigen Ansprüchen definiert.

Die Erfindung betrifft demnach ein Anhängersteuermodul einer druckmittelbetriebenen Bremsanlage eines Zugfahrzeugs, mit einer Ventilanordnung zur Steuerung einer pneumatischen Bremsanlage eines Anhängerfahrzeugs. Die Ventilanordnung weist folgendes auf: Ein elektronisch gesteuertes Anhängersteuerventil, welches ein pneumatisch gesteuertes Relaisventil mit einem invertierten Steuereingang enthält, ein druckmittelgesteuertes Backupventil, welches ein druckmittelgesteuertes Relaisventil enthält, und mindestens ein elektronisch gesteuertes Parkbremsventil, mittels dem das Relaisventil des Anhängersteuerventils an dessen invertierten Steuereingang pneumatisch ansteuerbar ist.

Zur Lösung der gestellten Aufgabe ist bei diesem Anhängersteuermodul vorgesehen, dass zusätzlich eine Koppeleinrichtung vorhanden ist, mittels der auch die Parkbremsen des Zugfahrzeugs über das Parkbremsventil betätigbar sind.

Durch die Anordnung einer Koppeleinrichtung in der Ventilanordnung des Anhängersteuermoduls sind neben den Radbremsen des Anhängerfahrzeugs auch die Parkbremsen des Zugfahrzeugs über das Parkbremsventil betätigbar. Dadurch kann ein Handbremsventil in der Fahrerkabine des Zugfahrzeugs und/oder ein externes Magnetschaltventil zur automatischen Betätigung der Parkbremsen des Zugfahrzeugs entfallen und eingespart werden.

Hinsichtlich der Koppeleinrichtung ist bevorzugt vorgesehen, dass diese ein pneumatisch steuerbares Koppelventil mit einem Steuereingang aufweist, dass der Steuereingang des Koppelventils über eine Anschlussleitung mit dem Ausgang des Parkbremsventils oder mit dem Ausgang eines dem Ausgang des Parkbremsventils nachgeschalteten Wechselventils verbunden ist, und dass der Parkbremszylinder des Zugfahrzeugs über das Koppelventil wechselweise mit einer Druckmittelquelle oder mit einer Druckmittelsenke verbindbar sind. Hierdurch sind die Parkbremsen des Zugfahrzeugs synchron zu den Radbremsen des Anhängerfahrzeugs lösbar und einlegbar.

Das Koppelventil ist bevorzugt als ein pneumatisch druckgesteuertes 3/2-Wege-Schaltventil mit einem Ausgang ausgebildet. An den Ausgang des Koppelventils ist eine zu den Parkbremszylindern des Zugfahrzeugs führende Bremsleitung angeschlossen, wobei diese Bremsleitung im steuerdrucklosen Zustand des Koppelventils über dessen Eingang mit der Druckmittelsenke sowie im steuerdruckführenden Zustand des Koppelventils über dessen Eingang mit der Druckmittelquelle verbunden ist.

Bei einer hydraulischen Bremsanlage des Zugfahrzeugs sind die Parkbremszylinder des Zugfahrzeugs über das Koppelventil wechselweise mit einer an eine Ölpumpe angeschlossenen hydraulischen Versorgungsleitung oder mit einer in einen Sammelbehälter führenden drucklosen Rücklaufleitung verbindbar.

Bei einer pneumatischen Bremsanlage des Zugfahrzeugs sind die Parkbremszylinder des Zugfahrzeugs über das Koppelventil wechselweise mit einer an eine Druckluftversorgungsanlage angeschlossenen pneumatischen Vorratsleitung oder mit einem in die Umgebung führenden Entlüftungsausgang verbindbar.

Für die Durchführung einer Kontrollfunktion, mit der ein Fahrer überprüfen kann, ob beim Abstellen eines Fahrzeuggespanns die Parkbremsen des Zugfahrzeugs ausreichen, um das Fahrzeuggespann sicher an der Parkposition zu halten, weist die Koppeleinrichtung vorteilhaft zusätzlich ein Kontrollventil auf, über das der Steuereingang des Koppelventils wechselweise mit dem Ausgang des Parkbremsventils oder mit dem Ausgang des Wechselventils verbindbar ist, oder entlüftbar ist.

Das Kontrollventil ist bevorzugt als ein 3/2-Wege-Magnetschaltventil mit einem Ausgang ausgebildet, und in einer von dem Ausgang des Parkbremsventils oder von dem Ausgang des Wechselventils zu dem Steuereingang des Koppelventils führenden Anschlussleitung angeordnet. Der Ausgang des Kontrollventils ist an den Steuereingang des Koppelventils angeschlossen. Im unbestromten Zustand des Kontrollventils ist dessen Ausgang mit einem Entlüftungsausgang verbunden. Im bestromten Zustand des Kontrollventils ist dessen Ausgang mit dem Ausgang des Parkbremsventils oder mit dem Ausgang des nachgeschalteten Wechselventils verbunden. Bei einer Betätigung, also der Bestromung des Kontrollventils werden die Parkbremszylinder des Zugfahrzeugs auch bei druckführendem invertierten Steuerdruckeingang des Anhängersteuerventils und somit gelösten Radbremsen des Anhängerfahrzeugs drucklos geschaltet und damit die Parkbremsen des Zugfahrzeugs eingelegt, womit die Kontrollfunktion durchführbar ist.

Bei einer pneumatischen Bremsanlage des Zugfahrzeugs kann die Koppeleinrichtung in einer alternativen Ausführung auch nur eine Anschlussleitung umfassen, über die eine zu den Parkbremszylindern des Zugfahrzeugs führende Bremsleitung an den Ausgang des Parkbremsventils oder an den Ausgang eines diesem nachgeschalteten Wechselventils angeschlossen ist. Die Belüftung und Entlüftung der Parkbremszylinder des Zugfahrzeugs erfolgt dann unmittelbar über das Parkbremsventil und ein diesem gegebenenfalls nachgeschaltetes Wechselventil, was entsprechend große Öffnungsquerschnitte der Ventile und große Querschnitte der zwischen diesen und der Bremsleitung angeordneten Leitungen erfordert.

Auch diese Koppeleinrichtung weist für die Durchführung der vorgenannten Kontrollfunktion vorzugsweise zusätzlich ein Kontrollventil auf, mittels dem die Bremsleitung wechselweise mit dem Ausgang des Parkbremsventils oder mit dem Ausgang des Wechselventils verbindbar ist, oder entlüftbar ist.

Das Kontrollventil ist bevorzugt als ein 3/2-Wege-Magnetschaltventil mit einem Ausgang ausgebildet sowie zwischen der Anschlussleitung und der Bremsleitung des Zugfahrzeugs angeordnet. Der Ausgang des Kontrollventils ist dabei an die Bremsleitung des Zugfahrzeugs angeschlossen. Weiter ist vorgesehen, dass der an die Bremsleitung des Zugfahrzeugs angeschlossene Ausgang des Kontrollventils in dessen unbestromten Zustand mit einem Entlüftungsausgang verbunden ist, und dass der Ausgang des Kontrollventils in dessen bestromten Zustand mit der Anschlussleitung verbunden ist. Bei einer Betätigung, also einer Bestromung des Kontrollventils werden die Parkbremszylinder des Zugfahrzeugs auch bei druckführendem invertierten Steuerdruckeingang des Anhängersteuerventils und somit gelösten Radbremsen des Anhängerfahrzeugs entlüftet und damit die Parkbremsen des Zugfahrzeugs eingelegt, womit die Kontrollfunktion durchführbar ist.

Zur Vereinfachung der Montage in dem jeweiligen Zugfahrzeug und zur Vermeidung von Montagefehlern sind alle Ventile und sonstigen Komponenten des Anhängersteuerventils, des Backupventils, des Parkbremsventils und der Koppeleinrichtung bevorzugt in einem Anhängersteuermodul mit einem einzigen Gehäuse zusammengefasst.

Zur weiteren Verdeutlichung der Erfindung ist der Beschreibung eine Zeichnung mit mehreren Ausführungsbeispielen beigefügt. In dieser zeigt
Fig. 1 eine hydraulische Bremsanlage eines Zugfahrzeugs mit einem erfindungsgemäßen Anhängersteuermodul in einer schematischen Abbildung,
Fig. 2 die hydraulische Bremsanlage des Zugfahrzeugs gemäß Fig. 1 mit einer Weiterbildung des Anhängersteuermoduls in einer schematischen Abbildung,
Fig. 3 die hydraulische Bremsanlage des Zugfahrzeugs gemäß Fig. 1 mit einem Anhängersteuermodul ähnlich dem der Fig. 2, jedoch mit einer geringeren Anzahl von Ventilen im dortigen Anhängersteuerventil,
Fig. 4 eine pneumatische Bremsanlage eines Zugfahrzeugs mit einer ersten Ausführungsform eines erfindungsgemäßen Anhängersteuermoduls in einer schematischen Abbildung,
Fig. 5 die pneumatische Bremsanlage des Zugfahrzeugs gemäß Fig. 3 mit einer Weiterbildung des Anhängersteuermoduls in einer schematischen Abbildung,
Fig. 6 eine pneumatische Bremsanlage eines Zugfahrzeugs mit einer zweiten Ausführungsform eines erfindungsgemäßen Anhängersteuermoduls in einer schematischen Abbildung,
Fig. 7 die pneumatische Bremsanlage des Zugfahrzeugs gemäß Fig. 5 mit einer Weiterbildung des Anhängersteuermoduls in einer schematischen Abbildung, und
Fig. 8 eine hydraulische Bremsanlage eines Zugfahrzeugs mit einer teilweise bekannten Ausführungsform eines Anhängersteuermoduls zur Steuerung des Bremsdruckes eines pneumatisch gebremsten Anhängerfahrzeugs in einer schematischen Abbildung.

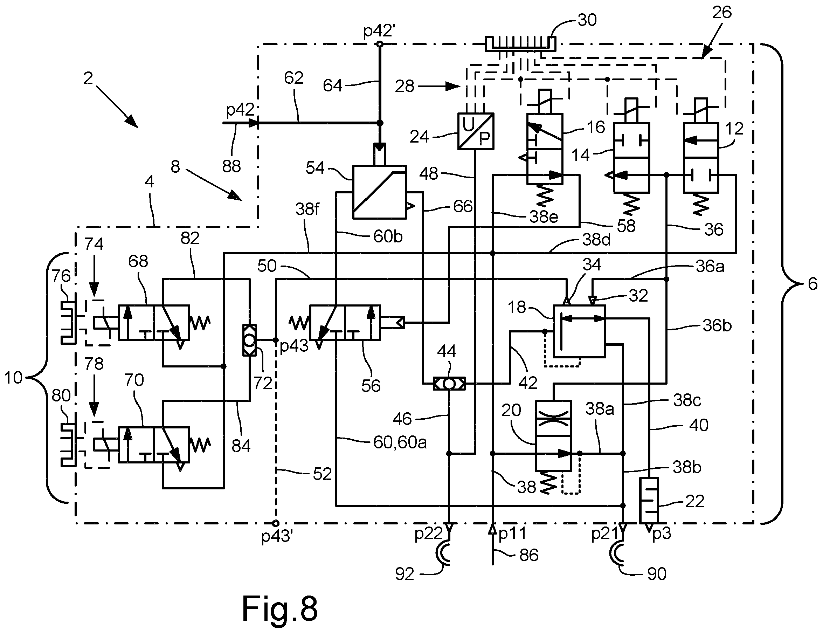

In der schematischen Abbildung der Fig. 8 ist ein Anhängersteuermodul 2 eines hydraulisch gebremsten Zugfahrzeugs zur Steuerung des Bremsdruckes eines pneumatisch gebremsten Anhängerfahrzeugs abgebildet, anhand dessen nachfolgend beispielhaft Ausführungen zu einer erfindungsgemäßen Ventilanordnung eines Zugfahrzeugs mit einer hydraulischen oder pneumatischen Bremsanlage beschrieben und funktionstechnisch erläutert werden. Das zu dem dort dargestellten Anhängersteuermodul 2 gehörende Anhängersteuerventil 6 ist aus der DE 10 2018 104 143 A1 zumindest weitgehend bekannt.

Das Anhängersteuermodul 2 gemäß Fig. 8 umfasst ein elektropneumatisch gesteuertes Anhängersteuerventil 6, ein hydraulisch gesteuertes Backupventil 8 sowie ein Parkbremsmodul 10, welche in einem gemeinsamen Gehäuse 4 angeordnet sind. Das Anhängersteuerventil 6 weist ein pneumatisch steuerbares Relaisventil 18, ein pneumatisch steuerbares Abrissventil 20, ein Einlassventil 12, ein Auslassventil 14, ein Vorsteuerventil 16, einen Schalldämpfer 22 und einen elektropneumatischen Drucksensor 24 auf. Das Einlassventil 12 und das Auslassventil 14 sind jeweils als ein 2/2-Wege-Magnetschaltventile, insbesondere als Taktventile, ausgebildet und dienen zu Ansteuerung des Relaisventils 18. Das Vorsteuerventil 16 ist als ein 3/2-Wege-Magnetschaltventil ausgebildet und dient zur Ansteuerung eines druckgesteuerten Redundanzventils 56 des Backupventils 8. Die Schaltmagnete des Einlassventils 12, des Auslassventils 14 und des Vorsteuerventils 16 sind über nicht im Einzelnen bezeichnete elektrische Steuerleitungen 26 und der Drucksensor 24 über elektrische Sensorleitungen 28 mit einer in der Außenwand des Gehäuses 4 angeordneten ersten Steckerbuchse 30 verbunden. Über diese erste Steckerbuchse 30 sind die genannten Bauteile im eingebauten Zustand des Anhängersteuermoduls 2 mittels eines entsprechenden Steckers und Kabels mit einem nicht dargestellten elektronischen Steuergerät verbunden.

Das Einlassventil 12 ist im unbestromten Zustand geschlossen und im bestromten Zustand geöffnet. Das Auslassventil 14 ist im unbestromten Zustand geöffnet und im bestromten Zustand geschlossen. Leitungszweige 36a, 36b einer an das Einlassventil 12 und das Auslassventil 14 angeschlossenen Steuerdruckleitung 36, welche zu einem direkten ersten Steuereingang 32 des Relaisventils 18 beziehungsweise zu einem Steuerdruckeingang des Abrissventils 20 führen, sind über das Einlassventil 12 mit einem Leitungsabschnitt 38d einer internen Vorratsdruckleitung 38 sowie über das Auslassventil 14 mit einem Entlüftungsausgang verbindbar. Die Vorratsdruckleitung 38 ist an einen Vorratsdruckeingang p11 des Anhängersteuermoduls 2 angeschlossen. Im eingebauten Zustand des Anhängersteuermoduls 2 ist an den Vorratsdruckeingang p11 eine externe Vorratsdruckleitung 86 einer pneumatischen Druckversorgungsanlage des Zugfahrzeugs angeschlossen. In dieser externen Vorratsdruckleitung 86 herrscht bei laufendem Antriebsmotor des Zugfahrzeugs einen Vorratsdruck in Höhe von etwa 8,5 ×10⁵ Pa.

Ein von der internen Vorratsdruckleitung 38 abzweigender Leitungsabschnitt 38a ist über das Abrissventil 20 und einen ausgangsseitigen Leitungsabschnitt 38b an einen Vorratsdruckausgang p21 des Anhängersteuerventils 6 beziehungsweise des Anhängersteuermoduls 2 geführt. An den Vorratsdruckausgang p21 ist ein Kupplungskopf "Vorrat" (rot) 90 angeschlossen.

Ein Vorratsdruckeingang des Relaisventils 18 des Anhängersteuerventils 6 ist über einen weiteren Leitungsabschnitt 38c und den genannten abzweigenden Leitungsabschnitt 38a sowie über das Abrissventil 20 an die Vorratsdruckleitung 38 angeschlossen. Ein Entlüftungsausgang des Relaisventils 18 des Anhängersteuerventils 6 ist über eine Entlüftungsleitung 40 und den Schalldämpfer 22 an einen Entlüftungsausgang p3 des Anhängersteuermoduls 2 geführt. Ein Bremssteuerausgang des Relaisventils 18 ist über eine interne Bremssteuerleitung 42, ein erstes Wechselventil 44 und eine ausgangsseitige Bremssteuerleitung 46 an einen Bremsdruckausgang p22 des Anhängersteuermoduls 4 geführt. An diesen Bremsdruckausgang p22 ist ein Kupplungskopf "Bremse" (gelb) 92 angeschlossen. Der Drucksensor 24 ist über eine Sensordruckleitung 48 an die ausgangsseitige Bremssteuerleitung 46 angeschlossen.

Eine weitere Steuerdruckleitung 50 ist zwischen einem hier intern angeordneten invertierten Steuerdruckeingang p43 des Anhängersteuerventils 6 und einem invertierten zweiten Steuerdruckeingang 34 des Relaisventils 18 des Anhängersteuerventils 6 angeordnet. Von dem internen Steuerdruckeingang p43 ist optional eine Anschlussleitung 52 an einen externen Druckanschluss p43' geführt, der an einer äußeren Wand des Gehäuses 4 angeordnet ist.

Das Backupventil 8 weist ein hydraulisch angesteuertes Relaisventil 54 sowie das über das erwähnte Vorsteuerventil 16 des Anhängersteuerventils 6 ansteuerbare Redundanzventil 56 auf. Das Redundanzventil 56 ist als ein pneumatisch steuerbares 3/2-Wege-Schaltventil ausgebildet, dessen Steuereingang über das Vorsteuerventil 16 wechselweise mit einem aus der internen Vorratsdruckleitung 38 entnommenen Steuerdruck beaufschlagbar oder drucklos schaltbar ist.

Im unbestromten Zustand des Vorsteuerventils 16 ist eine an den Steuereingang des Redundanzventils 56 angeschlossene Steuerdruckleitung 58 mit einem von der Vorratsdruckleitung 38 abzweigenden Leitungsabschnitt 38e verbunden und somit druckführend. Im bestromten Zustand des Vorsteuerventils 16 ist die Steuerdruckleitung 58 mit einem Entlüftungsausgang des Vorsteuerventils 16 verbunden und somit drucklos.

Das Redundanzventil 56 ist in einer Vorratsdruckleitung 60 angeordnet, die von dem ausgangsseitigen Leitungsabschnitt 38b der internen Vorratsdruckleitung 38 an den Vorratsdruckeingang des Relaisventils 54 geführt ist. Bei drucklosem Steuereingang des Redundanzventils 56 ist der ausgangsseitige Leitungsabschnitt 60b der gerade erwähnten Vorratsdruckleitung 60 mit einem Entlüftungsausgang am Redundanzventil 56 verbunden und somit drucklos. Bei druckführendem Steuereingang des Redundanzventils 56 ist der ausgangsseitige Leitungsabschnitt 60b mit dem eingangsseitigen Leitungsabschnitt 60a der Vorratsdruckleitung 60 verbunden und steht somit unter dem Vorratsdruck.

Von einem hydraulischen Bremsdruckeingang p42 des Backupventils 8, an den eine von einer hydraulischen Bremsleitung des Zugfahrzeugs abzweigende hydraulische Steuerdruckleitung 88 führt, ist eine interne hydraulische Steuerdruckleitung 62 an einen Steuerdruckeingang des Relaisventils 54 geführt. Von dieser internen hydraulischen Steuerdruckleitung 62 ist auch eine Anschlussleitung 64 an einen in der Außenwand des Gehäuses 4 angeordneten Bremsdruckanschluss p42' geführt, an den optional ein elektrohydraulischer Drucksensor angeschlossen werden kann.

Bei druckführendem Vorratsdruckeingang wird aus dem Relaisventil 54 in Abhängigkeit von dem an dem Bremsdruckeingang p42 anliegenden Bremsdruckes ein Bremssteuerdruck ausgesteuert, der über eine Bremssteuerleitung 66 an das erste Wechselventil 44 geleitet wird. Dieses erste Wechselventil 44 leitet den jeweils höheren Bremssteuerdruck aus der Bremssteuerleitung 42 des Anhängersteuerventils 6 oder aus der Bremssteuerleitung 66 des Backupventils 8 an den Bremssteuerausgang p22 und den Kupplungskopf "Bremse" 92 weiter.

Im Normalbetrieb des Anhängersteuermoduls 2 ist das Anhängersteuerventil 6 aktiviert, indem es von dem zugeordneten elektronischen Steuergerät angesteuert wird. Bei Vorliegen eines Bremswertsignals, welches über einen in einem Fußbremsventil des Zugfahrzeugs angeordneten Bremssensor erfasst werden kann, wird durch eine entsprechende Ansteuerung des Einlassventils 12 und des Auslassventils 14 des Anhängersteuerventils 6 ein an dem direkten Steuereingang 32 des Relaisventils 18 anliegender Steuerdruck eingestellt. In dessen Abhängigkeit wird aus dem Relaisventil 18 ein entsprechender Bremssteuerdruck ausgesteuert, der über die Bremssteuerleitung 42, das erste Wechselventil 44 und die interne Bremssteuerleitung 46 an den Bremssteuerausgang p22 und den Kupplungskopf "Bremse" (gelb) 92 geführt wird. Bei angekoppeltem Anhängerfahrzeug werden der am Kupplungskopf "Vorrat" 90 anliegende Vorratsdruck und der an dem Kupplungskopf "Bremse" 92 anliegende Bremssteuerdruck an das Anhängerbremsventil des Anhängerfahrzeugs weitergeleitet, in dem der zutreffende Bremsdruck für die Radbremsen des Anhängerfahrzeugs eingestellt und über Bremsleitungen an die dortigen Radbremszylinder geleitet wird.

Das Redundanzventil 56 steuernde Vorsteuerventil 16 ist im Normalbetrieb des Anhängersteuermoduls 2 bestromt, sodass der Steuereingang des Redundanzventils 56 dann entlüftet und somit drucklos ist. Dadurch ist der ausgangsseitige Leitungsabschnitt 60b der Vorratsdruckleitung 60 entlüftet, wodurch das Relaisventil 54 des Backupventils 8 deaktiviert ist.

Bei einem Ausfall des elektronischen Steuergerätes beziehungsweise eines nicht vorhandenen elektronischen Bremswertsignals wird die Bestromung des Einlassventils 12 und des Auslassventils 14 des Anhängersteuerventils 6 abgeschaltet, wodurch das Einlassventil 12 dauerhaft geschlossen und das Auslassventil 14 dauerhaft geöffnet sind, in dessen Folge das Anhängersteuerventil 6 deaktiviert ist. Zugleich wird in der geschilderten Betriebssituation der Steuereingang des Redundanzventils 56 des Backupventils 8 durch die Abschaltung des Vorsteuerventils 16 über die Steuerdruckleitung 58 aus der internen Vorratsdruckleitung 38 mit dem Vorratsdruck beaufschlagt und das Redundanzventil 56 dadurch umgeschaltet. Durch die dadurch bewirkte Beaufschlagung des Vorratsdruckeingangs des Relaisventils 54 aus der Vorratsdruckleitung 60 mit dem Vorratsdruck wird das Backupventil 8 aktiviert. Hierdurch wird nun in dem hydraulisch angesteuerten Relaisventil 54 in Abhängigkeit von dem in der hydraulischen Steuerdruckleitung 62 wirksamen Bremsdruck ein entsprechender Bremssteuerdruck eingestellt, der über die Bremssteuerleitung 66, das erste Wechselventil 44 und die Bremssteuerleitung 46 an den Bremssteuerausgang p22 und den Kupplungskopf "Bremse" (gelb) 92 geführt wird. Bei vorliegendem Redundanzfall wird bei angekoppeltem Anhängerfahrzeug somit in dem Anhängerbremsventil des Anhängerfahrzeugs ein dem über das Relaisventil 54 des Backupventils 8 eingestellten Bremssteuerdruck entsprechender Bremsdruck für die Radbremsen des Anhängerfahrzeugs eingestellt und über die Bremsleitungen an die dortigen Radbremszylinder geleitet.

Das Parkbremsmodul 10 dient zur Ansteuerung des Relaisventils 18 des Anhängersteuerventils 6 an dessen invertierten Steuereingang 34 zur Betätigung der Radbremsen eines angekoppelten Anhängerfahrzeugs in einer Parkbremsfunktion.

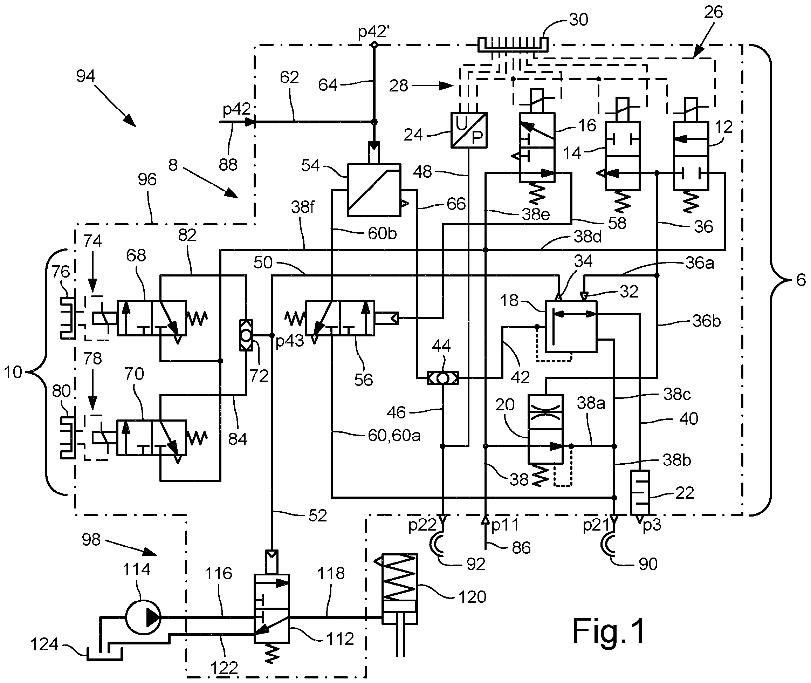

Das Parkbremsmodul 10 umfasst zwei parallel geschaltete Parkbremsventile 68, 70 und ein diesen ausgangsseitig nachgeschaltetes zweites Wechselventil 72. Dieses zweite Wechselventil 72 ist ausgangsseitig über den internen Steuerdruckeingang p43 an die schon erwähnte Steuerdruckleitung 50 angeschlossen, welche zu dem invertierten Steuereingang 34 des Relaisventils 18 führt. Die beiden Parkbremsventile 68, 70 sind als 3/2-Wege-Magnetschaltventile ausgeführt, deren Schaltmagnete über elektrische Steuerleitungen 74, 78 mit jeweils einer in der Außenwand des Gehäuses 4 angeordneten zweiten beziehungsweise dritten Steckerbuchse 76, 80 elektrisch verbunden sind. Im eingebauten Zustand des Anhängersteuermoduls 2 sind die Schaltmagnete der Parkbremsventile 68, 70 jeweils über ein mit einem entsprechenden Stecker versehenes Kabel mit einem elektronischen Steuergerät des Parkbremsmoduls 10 verbunden, das separate Schalteinheiten zur unabhängigen Schaltbetätigung der Parkbremsventile 68, 70 aufweist. Die Schalteinheiten des elektronischen Steuergerätes sind derart ausgebildet, dass der jeweilige Schaltzustand der Parkbremsventile 68, 70 selbsttätig gehalten wird und nur aktiv geändert werden kann. Die Kabel und das elektronische Steuergerät sind in Fig. 1 nicht abgebildet, dem Fachmann aber natürlich bekannt.

Über die beiden Parkbremsventile 68, 70 ist jeweils eine an einen der Eingänge des zweiten Wechselventils 72 angeschlossene Bremssteuerleitung 82, 84 wechselweise mit einem Zweig eines von der internen Vorratsdruckleitung 38 abzweigenden Leitungsabschnittes 38f oder mit einem Entlüftungsausgang verbindbar. Das zweite Wechselventil 72 leitet den jeweils höheren Bremssteuerdruck aus der Bremssteuerleitung 82 des ersten Parkbremsventils 68 oder aus der Bremssteuerleitung 84 des zweiten Parkbremsventils 70 an den internen Steuerdruckeingang p43 und damit an den invertierten Steuereingang 34 des Relaisventils 18 weiter. Im unbestromten Zustand der beiden Parkbremsventile 68, 70 sind die Bremssteuerleitungen 82, 84 und damit auch der invertierte Steuereingang 34 des Relaisventils 18 wie in Fig. 8 dargestellt drucklos geschaltet. Hierdurch wird aus dem Relaisventil 18 des Anhängersteuerventils 6 ein maximaler Bremssteuerdruck ausgesteuert, der über die Bremssteuerleitung 42, das erste Wechselventil 44 und die Bremssteuerleitung 46 an den Bremssteuerausgang p22 und den Kupplungskopf "Bremse" (gelb) 92 geführt wird. In dessen Folge werden bei einem angekoppelten Anhängerfahrzeug dessen Radbremszylinder über das dortige Anhängerbremsventil mit einem maximalen Bremsdruck beaufschlagt, wodurch die dortigen Radbremsen in der Parkbremsfunktion eingelegt werden.

Bei einer Betätigung, also Umschaltung eines der beiden Parkbremsventile 68, 70 wird die betreffende Bremssteuerleitung, also Bremssteuerleitung 82 oder Bremssteuerleitung 84 und damit der invertierte Steuereingang 34 des Relaisventils 18 aus dem Leitungsabschnitt 38f der internen Vorratsdruckleitung 38 mit dem Vorratsdruck beaufschlagt. Hierdurch werden bei einem angekoppelten Anhängerfahrzeug dessen Radbremszylinder über das dortige Anhängerbremsventil entlüftet, wodurch die dortigen Radbremsen in der Parkbremsfunktion gelöst werden. Im Fahrbetrieb des Zugfahrzeugs sind die Parkbremsen 68, 70 demnach bestromt und somit umgeschaltet, sodass die Radbremsen eines angekoppelten Anhängerfahrzeugs in der Parkbremsfunktion gelöst sind.

Die nachfolgend beschriebenen Anhängersteuermodule 94, 94`; 100, 100`; 106, 106' sind im Vergleich mit dem Parkbremsmodul 2 gemäß Fig. 8 jeweils um eine Koppeleinrichtung 98, 98'; 104, 104'; 110, 110' erweitert. Mittels dieser Koppeleinrichtungen 98, 98'; 104, 104'; 110, 110' sind zusätzlich auch die Parkbremsen des Zugfahrzeugs über die Parkbremsventile 68, 70 des Parkbremsmoduls 10 betätigbar.

Bei den in den Figuren 1 bis 3 abgebildeten Anhängersteuermodulen 94, 94', 94" wird wie bei dem Anhängersteuermodul 2 gemäß Fig. 8 eine hydraulische Bremsanlage des Zugfahrzeugs vorausgesetzt.

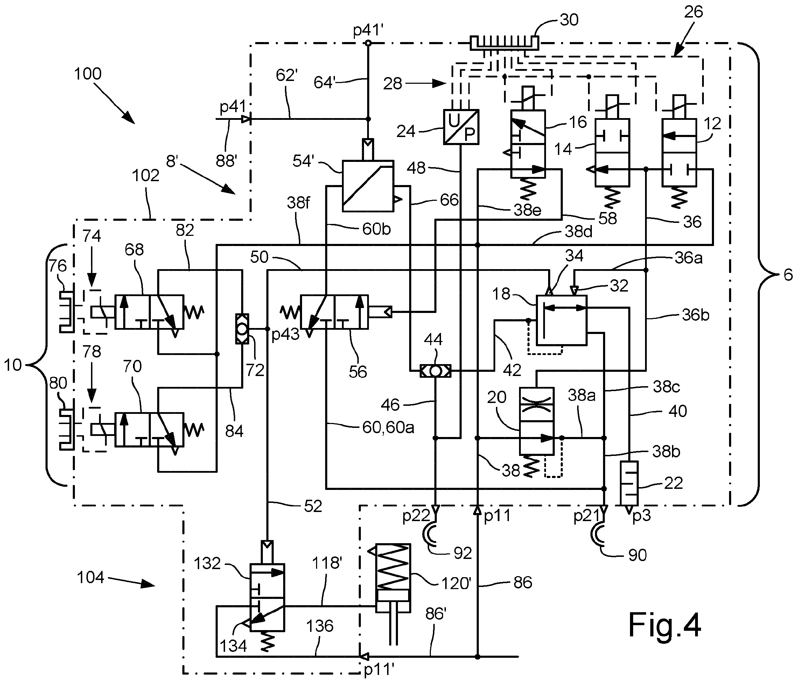

Dagegen wird bei den in den Figuren 4 bis 7 abgebildeten Anhängersteuermodulen 100, 100`; 106, 106' von einer pneumatischen Bremsanlage des Zugfahrzeugs ausgegangen. Daher ist das jeweilige Relaisventil 54' des Backupventils 8' bei diesen Anhängersteuerventilen 100, 100`; 106, 106' pneumatisch ansteuerbar ausgebildet. Daher ist bei diesen Anhängersteuermodulen 100, 100`; 106, 106' gemäß den Figuren 4 bis 7 vorgesehen, dass von einem pneumatischen Bremsdruckanschluss p41 des Backupventils 8', an den eine von einer pneumatischen Bremsleitung des Zugfahrzeugs abzweigende pneumatische Steuerdruckleitung 88' angeschlossen ist, eine interne pneumatische Steuerdruckleitung 62' an einen Steuerdruckeingang des Relaisventils 54' geführt ist. Von dieser Steuerdruckleitung 62' ist auch eine Anschlussleitung 64' an einen in der Außenwand des jeweiligen Gehäuses 102, 102'; 108, 108' angeordneten Bremsdruckanschluss p41' geführt, an den optional ein elektropneumatischer Drucksensor angeschlossen werden kann. Die Funktion des Relaisventils 54' gemäß den Figuren 4 bis 7 entspricht prinzipiell der Funktion des zuvor beschriebenen hydraulisch ansteuerbaren Relaisventils 54 gemäß Fig. 8.

Die Koppeleinrichtung 98 des in Fig. 1 abgebildeten Anhängersteuermoduls 94 umfasst ein pneumatisch steuerbares Koppelventil 112 mit einem pneumatischen Steuereingang, der über die Anschlussleitung 52 mit dem Ausgang des zweiten Wechselventils 72 verbunden ist. Über das Koppelventil 112 sind die Parkbremszylinder 120 des Zugfahrzeugs wechselweise mit einer Druckmittelquelle 114 oder mit einer Druckmittelsenke 124 verbindbar. Die Parkbremszylinder 120 sind als hydraulisch betätigbare Federspeicherbremszylinder ausgeführt und vorliegend zur Vereinfachung der Darstellung durch einen einzigen Parkbremszylinder 120 repräsentiert.

Das Koppelventil 112 ist als ein pneumatisch druckgesteuertes 3/2-Wege-Schaltventil ausgebildet, dessen Steuereingang über die Anschlussleitung 52 mit dem Ausgang des zweiten Wechselventils 72 des Parkbremsmoduls 10 und der zum Relaisventils 18 führenden Steuerdruckleitung 50 verbunden ist. An einen Ausgang des Koppelventils 112 ist eine zu den Parkbremszylindern 120 des Zugfahrzeugs führende Bremsleitung 118 angeschlossen. Im steuerdrucklosen Zustand des Koppelventils 112 ist die Bremsleitung 118 mit einer in einen Sammelbehälter 124 führenden drucklosen Rücklaufleitung 122 verbunden, wodurch die Parkbremsen des Zugfahrzeugs durch die Belüftung der Parkbremszylinder 120 betätigt, also eingelegt sind. Im steuerdruckführenden Zustand des Koppelventils 112 ist die Bremsleitung 118 mit einer an eine Ölpumpe 114 angeschlossenen hydraulischen Versorgungsleitung 116 verbunden, wodurch die Parkbremsen des Zugfahrzeugs durch die Druckbeaufschlagung der Parkbremszylinder 120 gelöst sind.

Da die Parkbremszylinder 120 des Zugfahrzeugs im steuerdrucklosen Zustand des Koppelventils 112, also wenn auch der invertierte Steuereingang 34 des Relaisventils 18 entlüftet ist, belüftet beziehungsweise drucklos werden, erfolgt das Einlegen der Parkbremsen des Zugfahrzeugs und der Radbremsen eines angekoppelten Anhängerfahrzeugs in der Parkbremsfunktion synchron. Ebenso erfolgt das Lösen der Parkbremsen des Zugfahrzeugs und der Radbremsen eines angekoppelten Anhängerfahrzeugs in der Parkbremsfunktion synchron, weil die Parkbremszylinder 120 des Zugfahrzeugs im steuerdruckführenden Zustand des Koppelventils 112, also wenn auch der invertierte Steuereingang 34 des Relaisventils 18 mit dem Vorratsdruck belüftet wird, mit dem hydraulischen Versorgungsdruck beaufschlagt und damit gelöst werden.

Der Funktionsumfang des Anhängersteuermoduls 94 ist somit gegenüber dem Funktionsumfang des Anhängersteuermoduls 2 gemäß Fig. 8 mit relativ geringem apparativen Aufwand um die Betätigung der Parkbremsen des Zugfahrzeugs erweitert. Die Ventile (12, 14, 16, 18, 20, 44, 54, 56, 68, 70, 72, 112) und die sonstigen Komponenten (22, 24) des Anhängersteuerventils 6, des Backupventils 8, des Parkbremsmoduls 10 und der Koppeleinrichtung 98 sind in dem Anhängersteuermodul 94 in einem einzigen Gehäuse 96 zusammengefasst, wodurch die Montage in dem jeweiligen Zugfahrzeug vereinfacht ist und Montagefehler vermieden werden.

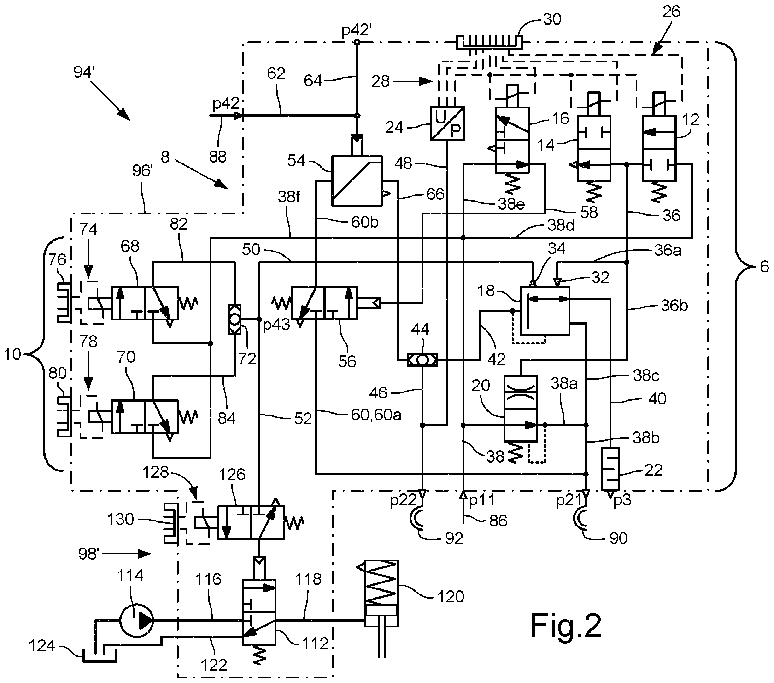

In Fig. 2 ist eine Weiterbildung des Anhängersteuermoduls 94 gemäß Fig. 1 abgebildet. Bei diesem Anhängersteuermodul 94' weist die Koppeleinrichtung 98' zusätzlich ein Kontrollventil 126 auf, über das der pneumatische Steuereingang des Koppelventils 112 wechselweise mit dem Ausgang des zweiten Wechselventils 72 verbindbar oder entlüftbar ist. Das Kontrollventil 126 ist als ein 3/2-Wege-Magnetschaltventil mit einem Ausgang ausgebildet und in der bereits erwähnten Anschlussleitung 52 angeordnet. Der Ausgang des Kontrollventils 126 ist an den Steuereingang des Koppelventils 112 angeschlossen und im unbestromten Zustand mit einem Entlüftungsausgang sowie im bestromten Zustand mit dem Ausgang des zweiten Wechselventils 72 verbunden. Der Schaltmagnet des Kontrollventils 126 ist über elektrische Steuerleitungen 128 mit einer in der Außenwand des Gehäuses 96' angeordneten Steckerbuchse 130 elektrisch verbunden. Im eingebauten Zustand des Anhängersteuermoduls 94' ist der Schaltmagnet des Kontrollventils 126 über ein mit einem geeigneten Stecker versehenes Kabel mit dem elektronischen Steuergerät des Parkbremsmoduls 10 verbunden.

Das Kontrollventil 126 dient zur Durchführung einer in den einschlägigen Zulassungsvorschriften vorgesehenen Kontrollfunktion, mit welcher ein Fahrer überprüfen kann, ob beim Abstellen eines Fahrzeuggespanns die Parkbremsen des Zugfahrzeugs ausreichen, das Fahrzeuggespann sicher an der Parkposition zu halten. Hierzu werden durch das gleichzeitige Umschalten der beiden Parkbremsventile 68, 70 und des Kontrollventils 126 die Radbremsen des Anhängerfahrzeugs in der Parkbremsfunktion durch die Belüftung des invertierten Steuereingangs 34 des Relaisventils 18 gelöst und zugleich die Parkbremsen des Zugfahrzeugs durch die Entlüftung des Steuereingangs des Koppelventils 112 eingelegt. Rollt das Fahrzeuggespann dann weiter, muss der Fahrer eine Parkposition mit geringerem Gefälle aufsuchen oder das Fahrzeuggespann mit Radkeilen gegen ein Wegrollen sichern.

Das Kontrollventil 126 ist zusammen mit den anderen Ventilen (12, 14, 16, 18, 20, 44, 54, 56, 68, 70, 72, 112) und den sonstigen Komponenten (22, 24) des Anhängersteuerventils 6, des Backupventils 8, des Parkbremsmoduls 10 und der Koppeleinrichtung 98' in dem Anhängersteuermodul 94' mit einem einzigen Gehäuse 96' baulich zusammengefasst.

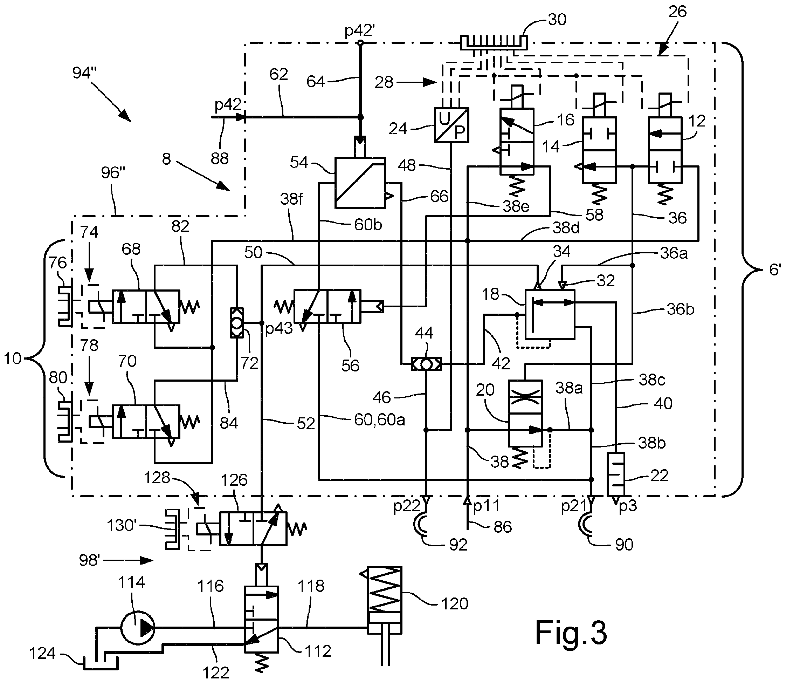

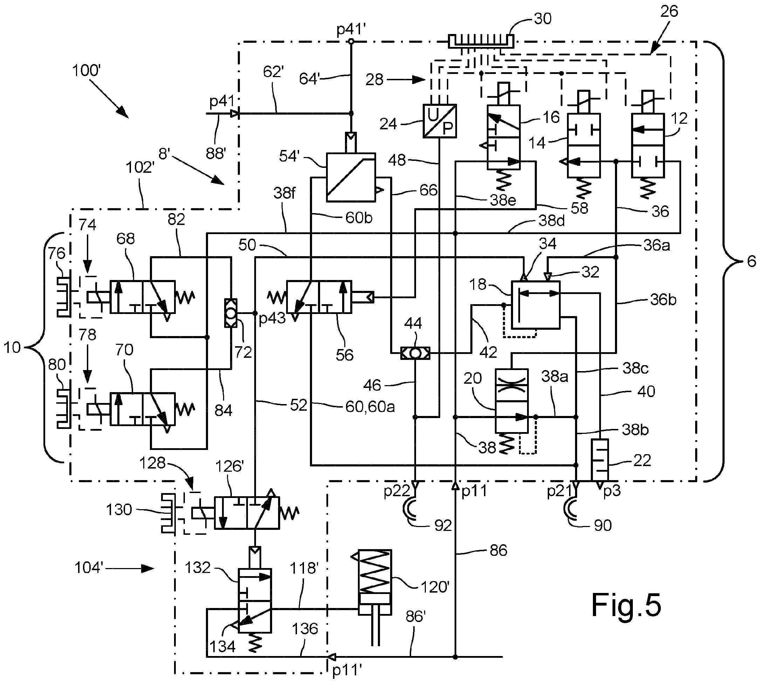

Die Fig. 3 zeigt eine Variante des in Fig. 2 dargestellten Anhängersteuermoduls 94'. Bei ansonsten identischem Aufbau gehören bei diesem Anhängersteuermodul 94" das Koppelventil 112, das Kontrollventil 126 und die dem Kontrollventil 126 zugeordneten Steuerleitungen 128 sowie die Steckerbuchse 130' nicht zu dem Anhängersteuerventil 6'. Anders ausgedrückt befinden sich die genannten baulichen Elemente der Koppeleinrichtung 98' nicht innerhalb der Systemgrenzen des Anhängersteuerventils 6' sowie nicht innerhalb von dessen Gehäuse 96". Hierdurch ist das Anhängersteuerventil 6' baulich vereinfacht sowie im Vergleich mit dem Anhängersteuerventil 6 gemäß Fig. 2 kleiner ausgebildet. Diese Bauweise kann auch bei dem Anhängersteuerventil 6 gemäß Fig. 5 realisiert sein. Die Steuerleitungen 128 zur Ansteuerung des Kontrollventils 126, 126' sind dann an eine Steckerbuchse 130' geführt, welche an einem anderen, nicht dargestellten Gehäuse befestigt ist.

Die Koppeleinrichtung 104 des in Fig. 4 abgebildeten Anhängersteuermoduls 100 umfasst analog zu dem Anhängersteuermodul 94 gemäß Fig. 1 ein pneumatisch steuerbares Koppelventil 132 mit einem Steuereingang, welcher über die Anschlussleitung 52 mit dem Ausgang des zweiten Wechselventils 72 verbunden ist. Über das Koppelventil 132 sind die Parkbremszylinder 120' des Zugfahrzeugs wechselweise mit einer Druckmittelquelle 86' oder mit einer Druckmittelsenke verbindbar. Die Druckmittelquelle ist in Fig. 4 anstelle einer Ölpumpe 114 durch eine Vorratsdruckleitung 86' symbolisiert. Die Parkbremszylinder 120' sind nun als pneumatisch betätigbare Federspeicherbremszylinder ausgeführt und vorliegend zur Vereinfachung der Darstellung durch einen einzigen Parkbremszylinder 120' repräsentiert.

Das Koppelventil 132 ist als ein pneumatisch druckgesteuertes 3/2-Wege-Schaltventil ausgebildet, dessen Steuereingang über die erwähnte pneumatische Anschlussleitung 52 mit dem Ausgang des zweiten Wechselventils 72 des Parkbremsmoduls 10 und der Steuerdruckleitung 50 des Relaisventils 18 verbunden ist. An einen Ausgang des Koppelventils 132 ist eine zu den Parkbremszylindern 120' des Zugfahrzeugs führende Bremsleitung 118' angeschlossen. Im steuerdrucklosen Zustand des Koppelventils 132 ist die Bremsleitung 118' mit einem in die Umgebung führenden Entlüftungsausgang 134 verbunden, wodurch die Parkbremsen des Zugfahrzeugs durch die Belüftung der Parkbremszylinder 120' betätigt, also eingelegt sind. Im steuerdruckführenden Zustand des Koppelventils 132 ist die Bremsleitung 118' über eine an einen Vorratsdruckeingang p11' geführte Anschlussleitung 136 mit der an eine Druckluftversorgungsanlage angeschlossenen pneumatischen Vorratsleitung 86' verbunden, wodurch die Parkbremsen des Zugfahrzeugs durch die Druckbeaufschlagung der Parkbremszylinder 120' gelöst sind.

Da die Parkbremszylinder 120' des Zugfahrzeugs im steuerdrucklosen Zustand des Koppelventils 132, also wenn auch der invertierte Steuereingang 34 des Relaisventils 18 entlüftet ist, entlüftet beziehungsweise drucklos werden, erfolgt das Einlegen der Parkbremsen des Zugfahrzeugs und der Radbremsen eines angekoppelten Anhängerfahrzeugs in der Parkbremsfunktion synchron. Ebenso erfolgt das Lösen der Parkbremsen des Zugfahrzeugs und der Radbremsen eines angekoppelten Anhängerfahrzeugs in der Parkbremsfunktion synchron, weil die Parkbremszylinder 120' des Zugfahrzeugs im steuerdruckführenden Zustand des Koppelventils 132, also wenn auch der invertierte Steuereingang 34 des Relaisventils 18 mit dem Vorratsdruck belüftet wird, mit dem Vorratsdruck beaufschlagt und damit gelöst werden.

Auch bei dem in Fig. 4 dargestellten Anhängersteuermodul 100 ist dessen Funktionsumfang im Vergleich mit dem Funktionsumfang des Anhängersteuermoduls 2 gemäß Fig. 8 mit relativ geringem apparativen Aufwand um die Betätigung der Parkbremsen des Zugfahrzeugs erweitert. Die Ventile (12, 14, 16, 18, 20, 44, 54', 56, 68, 70, 72, 132) und die sonstigen Komponenten (22, 24) des Anhängersteuerventils 6, des Backupventils 8, des Parkbremsmoduls 10 und der Koppeleinrichtung 104 sind in dem Anhängersteuermodul 100 in einem einzigen Gehäuse 102 zusammengefasst, wodurch die Montage in dem jeweiligen Zugfahrzeug vereinfacht ist und Montagefehler vermieden werden.

In Fig. 5 ist eine Weiterbildung des Anhängersteuermoduls 100 gemäß Fig. 4 abgebildet. Bei diesem Anhängersteuermodul 100' weist die Koppeleinrichtung 104' analog zu der Koppeleinrichtung 98' des Anhängersteuermoduls 94' gemäß Fig. 2 zusätzlich ein Kontrollventil 126' auf, über das der Steuereingang des Koppelventils 132 wechselweise mit dem Ausgang des zweiten Wechselventils 72 verbindbar oder entlüftbar ist. Das Kontrollventil 126' ist als ein 3/2-Wege-Magnetschaltventil mit einem Ausgang ausgebildet und in der bereits erwähnten Anschlussleitung 52 angeordnet. Der Ausgang des Kontrollventils 126' ist an den Steuereingang des Koppelventils 132 angeschlossen und im unbestromten Zustand mit einem Entlüftungsausgang sowie im bestromten Zustand mit dem Ausgang des zweiten Wechselventils 72 verbunden. Der Schaltmagnet des Kontrollventils 126' ist über elektrische Steuerleitungen 128 mit einer in der Außenwand des Gehäuses 102' angeordneten Steckerbuchse 130 verbunden. Im eingebauten Zustand des Anhängersteuermoduls 100' ist der Schaltmagnet des Kontrollventils 126' über ein mit einem entsprechenden Stecker versehenes Kabel mit dem elektronischen Steuergerät des Parkbremsmoduls 10 verbunden.

Das Kontrollventil 126' dient, wie zuvor schon beschrieben, zur Durchführung der Kontrollfunktion, mit der ein Fahrer überprüfen kann, ob beim Abstellen eines Fahrzeuggespanns die Parkbremsen des Zugfahrzeugs ausreichen, um das Fahrzeuggespann sicher an der Parkposition zu halten. Das Kontrollventil 126' ist zusammen mit den anderen Ventilen (12, 14, 16, 18, 20, 44, 54', 56, 68, 70, 72, 126', 132) und den sonstigen Komponenten (22, 24) des Anhängersteuerventils 6, des Backupventils 8, des Parkbremsmoduls 10 und der Koppeleinrichtung 104' in dem Anhängersteuermodul 100' mit einem einzigen Gehäuse 102' baulich zusammengefasst.

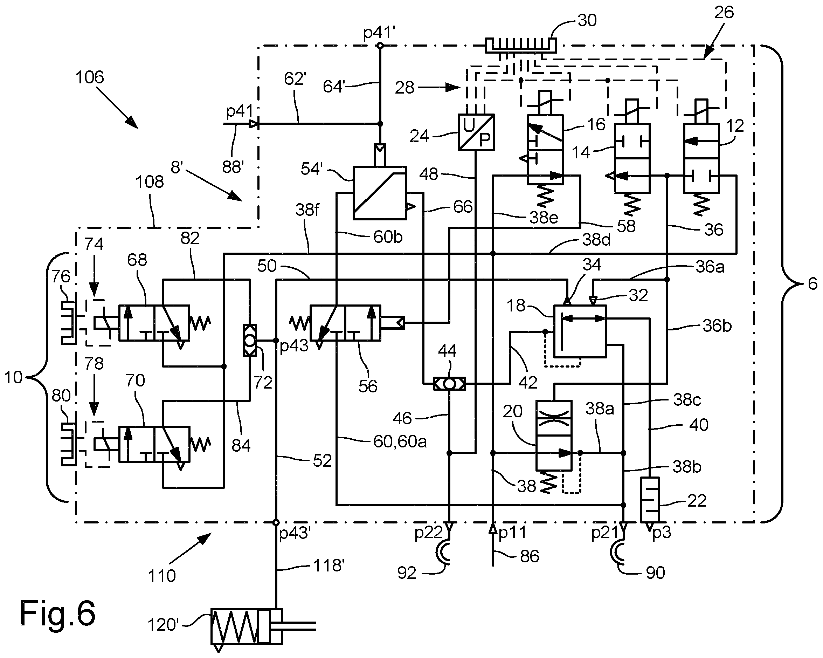

Die Koppeleinrichtung 110 des in Fig. 6 abgebildeten Anhängersteuermoduls 106 ist alternativ zu derjenigen der Koppeleinrichtung 104 des in Fig. 4 abgebildeten Anhängersteuermoduls 100 ausgeführt und umfasst nur die bereits erwähnte Anschlussleitung 52, über welche eine zu den Parkbremszylindern 120' des Zugfahrzeugs führende Bremsleitung 118 an den Ausgang des zweiten Wechselventils 72 angeschlossen ist. Die Belüftung und Entlüftung der als Federspeicherbremszylinder ausgeführten Parkbremszylinder 120' des Zugfahrzeugs erfolgt bei dieser Ausführung der Koppeleinrichtung 110 unmittelbar über die beiden Parkbremsventile 68, 70 des Parkbremsmoduls 10. Daher weisen die Parkbremsventile 68, 70 und das zweite Wechselventil 72 entsprechend große Öffnungsquerschnitte sowie die Bremssteuerleitungen 82, 84 und die Anschlussleitung 52 entsprechend große Querschnitte auf, um den entsprechend größeren Volumenstrom der in oder aus den Parkbremszylindern einströmenden oder ausströmenden Druckluft weitgehend drosselfrei bewältigen zu können.

Im unbetätigten, also unbestromten Zustand der beiden Parkbremsventile 68, 70 ist sowohl der invertierte Steuereingang 34 des Relaisventils 18 drucklos geschaltet als auch die Parkbremszylinder 120' des Zugfahrzeugs entlüftet, sodass sowohl die Radbremsen des Anhängerfahrzeugs in der Parkbremsfunktion als auch die Parkbremsen des Zugfahrzeugs eingelegt sind. Bei der Betätigung, also Umschaltung eines der beiden Parkbremsventile 68, 70 wird der invertierte Steuereingang 34 des Relaisventils 18 mit dem Vorratsdruck beaufschlagt und die Parkbremszylinder 120' des Zugfahrzeugs belüftet, welches zum Lösen der Radbremsen des Anhängerfahrzeugs in der Parkbremsfunktion und zum Lösen der Parkbremsen des Anhängerfahrzeugs führt.

Der Funktionsumfang des Anhängersteuermoduls 106 entspricht somit demjenigen des Anhängersteuermoduls 100 gemäß Fig. 4. Aufgrund der Einsparung des Koppelventils 132 weist die Koppeleinrichtung 110 des Anhängersteuerventils 106 jedoch einen deutlich einfacheren Aufbau auf. Die Ventile (12, 14, 16, 18, 20, 44, 54', 56, 68, 70, 72) und die sonstigen Komponenten (22, 24) des Anhängersteuerventils 6, des Backupventils 8, des Parkbremsmoduls 10 und der Koppeleinrichtung 110 sind in dem Anhängersteuermodul 106 in einem einzigen Gehäuse 108 zusammengefasst, wodurch die Montage in dem jeweiligen Zugfahrzeug vereinfacht ist und Montagefehler vermieden werden.

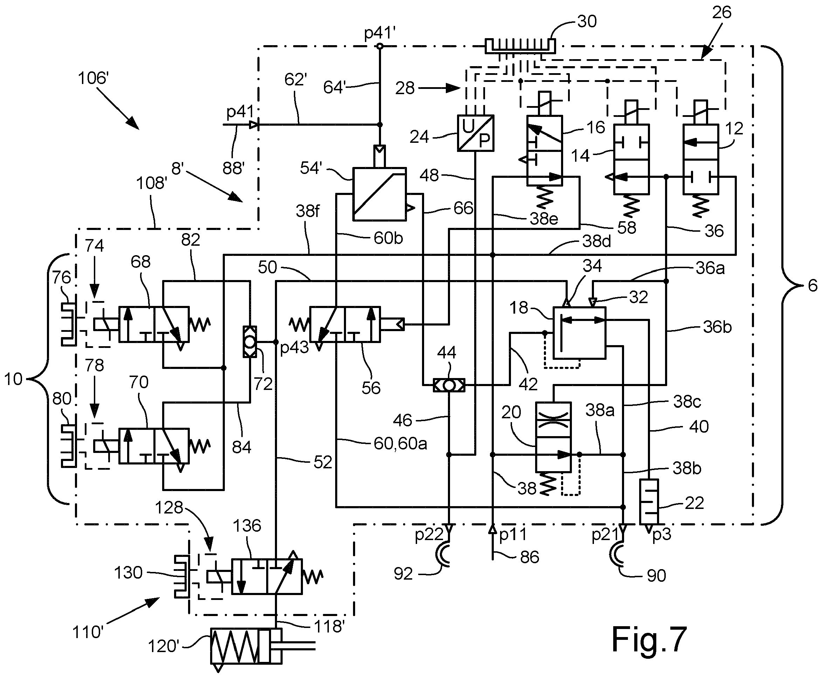

In Fig. 7 ist eine Weiterbildung des Anhängersteuermoduls 106 gemäß Fig. 6 abgebildet. Bei diesem Anhängersteuermodul 106' weist die Koppeleinrichtung 110' analog zu den Koppeleinrichtungen 98', 104' der beiden bereits beschriebenen Anhängersteuermodule 94', 100' gemäß den Figuren 2 und 5 zusätzlich ein Kontrollventil 136 mit einem größeren Öffnungsquerschnitt auf, über welches die Bremsleitung 118' wechselweise mit dem Ausgang des zweiten Wechselventils 72 verbindbar oder entlüftbar ist. Das Kontrollventil 136 ist als ein 3/2-Wege-Magnetschaltventil mit einem Ausgang ausgebildet und zwischen der bereits erwähnten Anschlussleitung 52 und der Bremsleitung 118' angeordnet. Der Ausgang des Kontrollventils 136 ist an die Bremsleitung 118' angeschlossen und im unbestromten Zustand mit einem Entlüftungsausgang sowie im bestromten Zustand mit der Anschlussleitung 52 verbunden. Der Schaltmagnet des Kontrollventils 136 ist über elektrische Steuerleitungen 128 mit einer in der Außenwand des Gehäuses 108' angeordneten Steckerbuchse 130 verbunden. Im eingebauten Zustand des Anhängersteuermoduls 106' ist der Schaltmagnet des Kontrollventils 136 über ein mit einem entsprechenden Stecker versehenes Kabel mit dem elektronischen Steuergerät des Parkbremsmoduls 10 verbunden.

Das Kontrollventil 136 gemäß Fig. 7 dient, wie zuvor beschrieben, zur Durchführung einer Kontrollfunktion, mit welcher ein Fahrer überprüfen kann, ob beim Abstellen eines Fahrzeuggespanns die Parkbremsen des Zugfahrzeugs ausreichen, um das Fahrzeuggespann sicher an der Parkposition zu halten. Das Kontrollventil 136 ist zusammen mit den anderen Ventilen (12, 14, 16, 18, 20, 44, 54', 56, 68, 70, 72) und den sonstigen Komponenten (22, 24) des Anhängersteuerventils 6, des Backupventils 8', des Parkbremsmoduls 10 und der Koppeleinrichtung 110' in dem Anhängersteuermodul 106' mit einem einzigen Gehäuse 108' zusammengefasst.

### Bezugszeichenliste

- 2: Anhängersteuermodul
- 4: Gehäuse
- 6: Anhängersteuerventil (mit größerem Integrationsumfang)
- 6': Anhängersteuerventil (mit kleinerem Integrationsumfang)
- 8: Backupventil
- 10: Parkbremsmodul
- 12: Einlassventil, 2/2-Wege-Magnetventil
- 14: Auslassventil, 2/2-Wege-Magnetventil
- 16: Vorsteuerventil, 3/2-Wege-Magnetventil
- 18: Erstes Relaisventil
- 20: Abrissventil
- 22: Schalldämpfer
- 24: Drucksensor
- 26: Steuerleitungen
- 28: Sensorleitungen
- 30: Erste Steckerbuchse (am Anhängersteuerventil 6)
- 32: Direkter Steuereingang am Relaisventil 18
- 34: Invertierter Steuereingang am Relaisventil 18
- 36: Steuerdruckleitung
- 36a, 36b: Leitungszweige
- 38: Vorratsdruckleitung
- 38a - 38f: Leitungsabschnitte
- 40: Entlüftungsleitung
- 42: Bremssteuerleitung
- 44: Erstes Wechselventil
- 46: Bremssteuerleitung
- 48: Sensordruckleitung
- 50: Steuerdruckleitung
- 52: Anschlussleitung
- 54, 54`: Zweites Relaisventil
- 56: Redundanzventil
- 58: Steuerdruckleitung
- 60: Vorratsdruckleitung
- 60a, 60b: Leitungsabschnitte
- 62, 62': Steuerdruckleitung
- 64, 64': Anschlussleitung
- 66: Bremssteuerleitung
- 68: Erstes Parkbremsventil
- 70: Zweites Parkbremsventil
- 72: Zweites Wechselventil
- 74: Steuerleitungen
- 76: Zweite Steckerbuchse (am Anhängersteuerventil 6)
- 78: Steuerleitungen
- 80: Dritte Steckerbuchse (am Anhängersteuerventil 6)
- 82: Bremssteuerleitung
- 84: Bremssteuerleitung
- 86: Vorratsdruckleitung an p11, Druckmittelquelle
- 86': Vorratsdruckleitung an p11', Druckmittelquelle
- 88: Hydraulische Steuerdruckleitung des Zugfahrzeugs an p42
- 88': Pneumatische Steuerdruckleitung des Zugfahrzeugs an p41
- 90: Kupplungskopf "Vorrat" (rot)
- 92: Kupplungskopf "Bremse" (gelb)
- 94: Anhängersteuermodul (erste Variante)
- 94': Anhängersteuermodul (zweite Variante)
- 94": Anhängersteuermodul (dritte Variante)
- 96: Gehäuse des Anhängersteuermoduls 94
- 96': Gehäuse des Anhängersteuermoduls 94'
- 96": Gehäuse des Anhängersteuermoduls 94"
- 98: Koppeleinrichtung (erste Variante)
- 98': Koppeleinrichtung (zweite Variante)
- 100: Anhängersteuermodul (vierte Variante)
- 100': Anhängersteuermodul (fünfte Variante)
- 102: Gehäuse des Anhängersteuermoduls 100
- 102': Gehäuse des Anhängersteuermoduls 100'
- 104: Koppeleinrichtung (dritte Variante)
- 104': Koppeleinrichtung (vierte Variante)
- 106: Anhängersteuermodul (sechste Variante)
- 106': Anhängersteuermodul (siebte Variante)
- 108: Gehäuse des Anhängersteuermoduls 106
- 108': Gehäuse des Anhängersteuermoduls 106'
- 110: Koppeleinrichtung (fünfte Variante)
- 110': Koppeleinrichtung (sechste Variante)
- 112: Koppelventil, 3/2-Wege-Schaltventil
- 114: Druckmittelquelle, Ölpumpe
- 116: Versorgungsleitung
- 118: Bremsleitung (erste Variante)
- 118': Bremsleitung (zweite Variante)
- 120: Parkbremszylinder (erste Variante)
- 120': Parkbremszylinder (zweite Variante)
- 122: Rücklaufleitung
- 124: Druckmittelsenke; Sammelbehälter
- 126: Kontrollventil, 3/2-Wege-Magnetschaltventil, (erste Variante)
- 126': Kontrollventil, 3/2-Wege-Magnetschaltventil, (zweite Variante)
- 128: Steuerleitungen
- 130: Vierte Steckerbuchse (am Anhängersteuerventil 6)
- 130`: Fünfte Steckerbuchse (nicht am Anhängersteuerventil 6')
- 132: Koppelventil, 3/2-Wege-Schaltventil
- 134: Druckmittelsenke, Entlüftungsausgang
- 136: Kontrollventil, 3/2-Wege-Magnetschaltventil, (dritte Variante)
- p3: Entlüftungsausgang
- p11: Erster Vorratsdruckeingang
- p11': Zweiter Vorratsdruckeingang
- p21: Vorratsdruckausgang
- p22: Bremssteuerausgang
- p41: Pneumatischer Bremsdruckeingang
- p41': Pneumatischer Bremsdruckanschluss
- p42: Hydraulischer Bremsdruckeingang
- p42': Hydraulischer Bremsdruckanschluss
- p43: Steuerdruckeingang
- p43': Externer Druckanschluss

## Patentansprüche

1. Anhängersteuermodul (94, 94', 94", 100, 100', 106, 106') einer druckmittelbetriebenen Bremsanlage eines Zugfahrzeugs, mit einer Ventilanordnung zur Steuerung einer pneumatischen Bremsanlage eines Anhängerfahrzeugs, wobei die Ventilanordnung folgendes aufweist: ein elektronisch gesteuertes Anhängersteuerventil (6, 6'), welches ein pneumatisch gesteuertes Relaisventil (18) mit einem invertierten Steuereingang (34) enthält, ein druckmittelgesteuertes Backupventil (8, 8'), welches ein druckmittelgesteuertes Relaisventil (54, 54') enthält, und mindestens ein elektronisch gesteuertes Parkbremsventil (68, 70), mittels dem das Relaisventil (18) des Anhängersteuerventils (6) an dessen invertierten Steuereingang (34) pneumatisch ansteuerbar ist, **dadurch gekennzeichnet, dass** zusätzlich eine Koppeleinrichtung (98, 98'; 104, 104'; 110, 110') vorhanden ist, mittels der auch die Parkbremsen des Zugfahrzeugs über das Parkbremsventil (68, 70) betätigbar sind.

2. Anhängersteuermodul (94, 94', 94", 100, 100') nach Anspruch 1, **dadurch gekennzeichnet,**
**dass** die Koppeleinrichtung (98, 98'; 104, 104') ein pneumatisch steuerbares Koppelventil (112, 132) mit einem Steuereingang aufweist,
**dass** der Steuereingang des Koppelventils (112, 132) über eine Anschlussleitung (52) mit dem Ausgang des Parkbremsventils (68, 70) oder mit dem Ausgang eines dem Ausgang des Parkbremsventils (68, 70) nachgeschalteten Wechselventils (72) verbunden ist,
und **dass** der Parkbremszylinder (120, 120') des Zugfahrzeugs über das Koppelventil (112, 132) wechselweise mit einer Druckmittelquelle (114, 86') oder mit einer Druckmittelsenke (124, 134) verbindbar sind.

3. Anhängersteuermodul (94, 94', 94", 100, 100') nach Anspruch 2, **dadurch gekennzeichnet,**
**dass** das Koppelventil (112, 132) als ein pneumatisch druckgesteuertes 3/2-Wege-Schaltventil mit einem Ausgang ausgebildet ist,
**dass** an den Ausgang des Koppelventils (112, 132) eine zu den Parkbremszylindern (120, 120') des Zugfahrzeugs führende Bremsleitung (118, 118') angeschlossen ist, wobei diese Bremsleitung (118, 118') im steuerdrucklosen Zustand des Koppelventils (112, 132) über dessen Eingang mit der Druckmittelsenke (124, 134) sowie im steuerdruckführenden Zustand des Koppelventils (112, 132) über dessen Eingang mit der Druckmittelquelle (114, 86') verbunden ist.

4. Anhängersteuermodul (94, 94', 94",) nach Anspruch 2 oder 3, **dadurch gekennzeichnet,**
**dass** die Parkbremszylinder (120) des Zugfahrzeugs bei einer hydraulischen Bremsanlage des Zugfahrzeugs über das Koppelventil (112) wechselweise mit einer an eine Ölpumpe (114) angeschlossenen hydraulischen Versorgungsleitung (116) oder mit einer in einen Sammelbehälter (124) führenden drucklosen Rücklaufleitung (122) verbindbar sind.

5. Anhängersteuermodul (100, 100') nach Anspruch 2 oder 3, **dadurch gekennzeichnet, dass** die Parkbremszylinder (120') des Zugfahrzeugs bei einer pneumatischen Bremsanlage des Zugfahrzeugs über das Koppelventil (132) wechselweise mit einer an eine Druckluftversorgungsanlage angeschlossenen pneumatischen Vorratsleitung (86') oder mit einem in die Umgebung führenden Entlüftungsausgang (134) verbindbar sind.

6. Anhängersteuermodul (94', 94", 100') nach einem der Ansprüche 1 bis 5, **dadurch gekennzeichnet,**
**dass** die Koppeleinrichtung (98', 104') zusätzlich ein Kontrollventil (126, 126') aufweist, über das der Steuereingang des Koppelventils (112, 132) wechselweise mit dem Ausgang des Parkbremsventils (68, 70) oder mit dem Ausgang des Wechselventils (72) verbindbar ist, oder entlüftbar ist.

7. Anhängersteuermodul (94', 94", 100') nach Anspruch 6, **dadurch gekennzeichnet,**
**dass** das Kontrollventil (126, 126') als ein 3/2-Wege-Magnetschaltventil mit einem Ausgang ausgebildet,
**dass** das Kontrollventil (126, 126') mit einer von dem Ausgang des Parkbremsventils (68, 70) oder von dem Ausgang des Wechselventils (72) zu dem Steuereingang des Koppelventils (112, 132) führenden Anschlussleitung (52) verbunden ist,
**dass** der Ausgang des Kontrollventils (126, 126') an den Steuereingang des Koppelventils (112, 132) angeschlossen ist,
**dass** der Ausgang des Kontrollventils (126, 126') in dessen unbestromten Zustand mit einem Entlüftungsausgang verbunden ist,
und **dass** der Ausgang des Kontrollventils (126, 126') in dessen bestromten Zustand mit dem Ausgang des Parkbremsventils (68, 70) oder mit dem Ausgang des nachgeschalteten Wechselventils (72) verbunden ist.

8. Anhängersteuermodul (106, 106') nach Anspruch 1, **dadurch gekennzeichnet,**
**dass** die Koppeleinrichtung (110, 110') bei einer pneumatischen Bremsanlage des Zugfahrzeugs eine Anschlussleitung (52) aufweist,
über welche eine zu den Parkbremszylindern (120') des Zugfahrzeugs führende Bremsleitung (118') an den Ausgang des Parkbremsventils (68, 70) oder an den Ausgang eines diesem nachgeschalteten Wechselventils (72) angeschlossen ist.

9. Anhängersteuermodul (106, 106') nach Anspruch 8, **dadurch gekennzeichnet,**
**dass** die Koppeleinrichtung (110') zusätzlich ein Kontrollventil (136) umfasst,
mittels dem die Bremsleitung (118') des Zugfahrzeugs wechselweise mit dem Ausgang des Parkbremsventils (68, 70) oder mit dem Ausgang des Wechselventils (72) verbindbar ist, oder entlüftbar ist.

10. Anhängersteuermodul (106, 106') nach Anspruch 9, **dadurch gekennzeichnet,**
**dass** das Kontrollventil (136) als ein 3/2-Wege-Magnetschaltventil mit einem Ausgang ausgebildet und zwischen der Anschlussleitung (52) und der Bremsleitung (118') des Zugfahrzeugs angeordnet ist,
**dass** der an die Bremsleitung (118') des Zugfahrzeugs angeschlossene Ausgang des Kontrollventils (136) in dessen unbestromten Zustand mit einem Entlüftungsausgang verbunden ist,
und **dass** der Ausgang des Kontrollventils (136) in dessen bestromten Zustand mit der Anschlussleitung (52) verbunden ist.

11. Anhängersteuermodul (94, 94', 100, 100', 106, 106') nach einem der Ansprüche 1 bis 10, **dadurch gekennzeichnet,**
**dass** die Ventile (12, 14, 16, 18, 20, 44, 54, 54', 56, 68, 70, 72, 112, 126, 126', 132, 136) und die sonstigen Komponenten (22, 24) des Anhängersteuerventils (6), des Backupventils (8, 8'), des Parkbremsmoduls (10) und der Koppeleinrichtung (98, 98'; 104, 104'; 110, 110') des Anhängersteuermoduls (94, 94'; 100, 100'; 106, 106') in einem einzigen Gehäuse (96, 96'; 102, 102'; 108, 108') zusammengefasst sind.

## Claims

1. Trailer control module (94, 94', 94", 100, 100', 106, 106') of a pressure-medium operated braking system of a tow vehicle, with a valve assembly for controlling a pneumatic braking system of a trailer vehicle, wherein the valve assembly comprises the following: an electronically controlled trailer control valve (6, 6') which contains a pneumatically controlled relay valve (18) with an inverted control input (34), a pressure-medium controlled backup valve (8, 8') which contains a pressure-medium controlled relay valve (54, 54'), and at least one electronically controlled parking brake valve (68, 70), by means of which the relay valve (18) of the trailer control valve (6) can be actuated pneumatically at its inverted control input (34), wherein in addition, a coupling device (98, 98'; 104, 104'; 110, 110') is present, by means of which the parking brakes of the tow vehicle can also be operated via the parking brake valve (68, 70).

2. Trailer control module (94, 94', 94", 100, 100') according to Claim 1, **characterized**
**in that** the coupling device (98, 98'; 104, 104') comprises a pneumatically controllable coupling valve (112, 132) with a control input,
**in that** the control input of the coupling valve (112, 132) is connected via a connecting line (52) to the output of the parking brake valve (68, 70) or to the output of a changeover valve (72) downstream of the output of the parking brake valve (68, 70),
and **in that** the parking brake cylinders (120, 120') of the tow vehicle can be connected via the coupling valve (112, 132) alternately to a pressure-medium source (114, 86') or to a pressure-medium sink (124, 134).

3. Trailer control module (94, 94', 94", 100, 100') according to Claim 2, **characterized**
**in that** the coupling valve (112, 132) is configured as a pneumatically pressure-controlled 3/2-way switching valve with one output,
**in that** a brake line (118, 118') leading to the parking brake cylinders (120, 120') of the tow vehicle is connected to the output of the coupling valve (112, 132),
wherein said brake line (118, 118') is connected, when the coupling valve (112, 132) is not under control pressure, via its input to the pressure-medium sink (124, 134) and when the coupling valve (112, 132) is carrying control pressure, via its input to the pressure-medium source (114, 86').

4. Trailer control module (94, 94', 94",) according to Claim 2 or 3, **characterized**
**in that**, with a hydraulic braking system of the tow vehicle, the parking brake cylinders (120) of the tow vehicle can be connected via the coupling valve (112) alternately to a hydraulic supply line (116) connected to an oil pump (114), or to a pressureless return line (122) leading to a collection tank (124).

5. Trailer control module (100, 100') according to Claim 2 or 3, **characterized**
**in that**, with a pneumatic braking system of the tow vehicle, the parking brake cylinders (120') of the tow vehicle can be connected via the coupling valve (132) alternately to a pneumatic reservoir line (86') connected to a compressed air supply system, or to a purge output (134) leading to the environment.

6. Trailer control module (94', 94", 100') according to any of Claims 1 to 5, **characterized**
**in that** the coupling device (98', 104') also has a test valve (126, 126') via which the control input of the coupling valve (112, 132) can be connected alternately to the output of the parking brake valve (68, 70) or to the output of the changeover valve (72), or can be purged.

7. Trailer control module (94', 94", 100') according to Claim 6, **characterized**
**in that** the test valve (126, 126') is configured as a 3/2-way magnetic switching valve with one output,
**in that** the test valve (126, 126') is connected to a connecting line (52) leading from the output of the parking brake valve (68, 70) or from the output of the changeover valve (72) to the control input of the coupling valve (112, 132),
**in that** the output of the test valve (126, 126') is connected to the control input of the coupling valve (112, 132),
**in that** the output of the test valve (126, 126') in its non-energized state is connected to a purge output,
and **in that** the output of the test valve (126, 126') in its energized state is connected to the output of the parking brake valve (68, 70) or to the output of the downstream changeover valve (72).

8. Trailer control module (106, 106') according to Claim 1, **characterized**
**in that**, with a pneumatic braking system of the tow vehicle, the coupling device (110, 110') has a connecting line (52),
via which a brake line (118') leading to the parking brake cylinders (120') of the tow vehicle can be connected to the output of the parking brake valve (68, 70) or to the output of a changeover valve (72) downstream thereof.

9. Trailer control module (106, 106') according to Claim 8, **characterized**
**in that** the coupling device (110') also has a test valve (136), by means of which the brake line (118') of the tow vehicle can be connected alternately to the output of the parking brake valve (68, 70) or to the output of the changeover valve (72), or can be purged.

10. Trailer control module (106, 106') according to Claim 9, **characterized**
**in that** the test valve (136) is configured as a 3/2-way magnetic switching valve with one output and is arranged between the connecting line (52) and the brake line (118') of the tow vehicle,
**in that** the output of the test valve (136) connected to the brake line (118') of the tow vehicle in its non-energized state is connected to a purge output,
and **in that** the output of the test valve (136) in its energized state is connected to the connecting line (52) .

11. Trailer control module (94, 94', 100, 100', 106, 106') according to any of Claims 1 to 10, **characterized in that** the valves (12, 14, 16, 18, 20, 44, 54, 54', 56, 68, 70, 72, 112, 126, 126', 132, 136) and the other components (22, 24) of the trailer control valve (6), the backup valve (8, 8'), the parking brake module (10) and the coupling device (98, 98'; 104, 104'; 110, 110') of the trailer control module (94, 94'; 100, 100'; 106, 106') are combined in a single housing (96, 96'; 102, 102'; 108, 108') .

## Revendications

1. Module de commande de remorque (94, 94', 94", 100, 100', 106, 106') d'un système de freinage, commandé par agent sous pression, d'un véhicule tracteur, ledit module comprenant un ensemble de soupapes destiné à commander un système de freinage pneumatique d'un véhicule à remorque, l'ensemble de soupapes comportant ceci : une soupape de commande de remorque à commande électronique (6, 6') qui contient une soupape relais à commande pneumatique (18) pourvue d'une entrée de commande inversée (34), une soupape de secours (8, 8'), commandée par agent sous pression, qui contient une soupape relais (54, 54') commandée par agent sous pression et au moins une soupape de frein de stationnement à commande électronique (68, 70) au moyen de laquelle la soupape relais (18) de la soupape de commande de remorque (6) peut être commandée pneumatiquement à son entrée de commande inversée (34), un dispositif d'accouplement (98, 98' ; 104, 104' ; 110, 110') étant en outre présent au moyen duquel les freins de stationnement du véhicule tracteur peuvent également être actionnés par le biais de la soupape de frein de stationnement (68, 70).

2. Module de commande de remorque (94, 94', 94", 100, 100') selon la revendication 1, **caractérisé en ce que**
le dispositif d'accouplement (98, 98' ; 104, 104') comporte une soupape d'accouplement (112, 132) à commande pneumatique pourvue d'une entrée de commande, l'entrée de commande de la soupape d'accouplement (112, 132) est reliée par le biais d'une conduite de raccordement (52) à la sortie de la soupape de frein de stationnement (68, 70) ou à la sortie d'une soupape de sélection (72) située en aval de la sortie de la soupape de frein de stationnement (68, 70),
et le cylindre de frein de stationnement (120, 120') du véhicule tracteur peut être relié alternativement à une source d'agent sous pression (114, 86') ou à un puits d'agent sous pression (124, 134) par le biais de la soupape d'accouplement (112, 132).

3. Module de commande de remorque (94, 94', 94", 100, 100') selon la revendication 2, **caractérisé en ce que**
la soupape d'accouplement (112, 132) est réalisée sous la forme d'une soupape de commutation à 3/2 voies, commandée par pression pneumatique, qui est pourvue d'une sortie,
une conduite de freinage (118, 118') menant aux cylindres de frein de stationnement (120, 120') du véhicule tracteur est raccordée à la sortie de la soupape d'accouplement (112, 132) à l'état sans pression de commande,
cette conduite de freinage (118, 118') étant reliée au puits d'agent sous pression (124, 134) par le biais de l'entrée de la soupape d'accouplement (112, 132) à l'état sans pression de commande de celle-ci et à la source de fluide sous pression (114, 86') par le biais de l'entrée de la soupape d'accouplement (112, 132) à l'état sous pression de commande de celle-ci.

4. Module de commande de remorque (94, 94', 94") selon la revendication 2 ou 3, **caractérisé en ce que** dans le cas d'un système de freinage hydraulique du véhicule tracteur, les cylindres de frein de stationnement (120) du véhicule tracteur peuvent être reliés, par le biais de la soupape d'accouplement (112), alternativement à une conduite d'alimentation hydraulique (116) raccordée à une pompe à huile (114) ou à une conduite de retour sans pression (122) menant à un réservoir collecteur (124).

5. Module de commande de remorque (100, 100') selon la revendication 2 ou 3, **caractérisé en ce que** les cylindres de frein de stationnement (120') du véhicule tracteur peuvent être reliés alternativement à une conduite d'alimentation pneumatique (86') de la soupape d'accouplement (132), raccordée à un système d'alimentation en air comprimé, ou à une sortie de ventilation (134) menant à l'environnement.

6. Module de commande de remorque (94', 94'', 100') selon l'une des revendications 1 à 5, **caractérisé en ce que**
le dispositif d'accouplement (98', 104') comporte en outre une soupape de commande (126, 126') par laquelle l'entrée de commande de la soupape d'accouplement (112, 132) peut être reliée alternativement à la sortie de la soupape de frein de stationnement (68, 70) ou à la sortie de sélection (72) ou peut être purgée.

7. Module de commande de remorque (94', 94'', 100') selon la revendication 6, **caractérisé en ce que**
la soupape de commande (126, 126') est réalisée sous la forme d'une soupape de commutation électromagnétique à 3/2 voies pourvue d'une sortie,
la soupape de commande (126, 126') est reliée à une conduite de raccordement (52) allant de la sortie de la soupape de frein de stationnement (68, 70) ou de la sortie de la soupape de sélection (72) à l'entrée de commande de la soupape d'accouplement (112, 132),
la sortie de la soupape de commande (126, 126') est raccordée à l'entrée de commande de la soupape d'accouplement (112, 132),
la sortie de la soupape de commande (126, 126') est reliée, lorsque celle-ci n'est pas alimentée, à une sortie de purge,
et la sortie de la soupape de commande (126, 126') est reliée, lorsque celle-ci est alimentée, à la sortie de la soupape de frein de stationnement (68, 70) ou à la sortie de la soupape de sélection (72) située en aval.

8. Module de commande de remorque (106, 106') selon la revendication 1, **caractérisé en ce que** dans le cas d'un système de freinage pneumatique du véhicule tracteur, le dispositif d'accouplement (110, 110') comporte une conduite de raccordement (52) par laquelle une conduite de freinage (118') menant aux cylindres de frein de stationnement (120') du véhicule tracteur est raccordée à la sortie de la soupape de frein de stationnement (68, 70) ou à la sortie d'une soupape de sélection (72) située en aval de celle-ci.

9. Module de commande de remorque (106, 106') selon la revendication 8, **caractérisé en ce que** le dispositif d'accouplement (110') comprend en outre une soupape de commande (136) au moyen de laquelle la conduite de freinage (118') du véhicule tracteur peut être reliée alternativement à la sortie de la soupape de frein de stationnement (68, 70) ou à la sortie de la soupape de sélection (72), ou peut être purgée.

10. Module de commande de remorque (106, 106') selon la revendication 9, **caractérisé en ce que**
la soupape de commande (136) est conçue comme une soupape de commutation électromagnétique à 3/2 voies pourvue d'une sortie et est disposée entre la conduite de raccordement (52) et la conduite de freinage (118') du véhicule tracteur,
lorsqu'elle n'est pas alimentée, la sortie de la soupape de commande (136), qui est raccordée à la conduite de freinage (118') du véhicule tracteur, est reliée à une sortie de purge,
et, lorsqu'elle est alimentée, la sortie de la soupape de commande (136) est reliée à la conduite de raccordement (52).

11. Module de commande de remorque (94, 94', 100, 100', 106, 106') selon l'une des revendications 1 à 10, **caractérisé en ce que**
les soupapes (12, 14, 16, 18, 20, 44, 54, 54', 56, 68, 70, 72, 112, 126, 126', 132, 136) et les autres composants (22, 24) de la soupape de commande de remorque (6), la soupape de secours (8, 8'), du module de frein de stationnement (10) et du dispositif d'accouplement (98, 98' ; 104, 104' ; 110, 110') du module de commande de remorque (94, 94' ; 100, 100' ; 106, 106') sont réunis dans un seul boîtier (96, 96' ; 102, 102' ; 108, 108').
